# EUROPÄISCHE PATENTSCHRIFT

(11) **EP 0 578 302 B1**
(45) Veröffentlichungstag und Bekanntmachung des Hinweises auf die Patenterteilung: **01.09.1999**
(21) Anmeldenummer: 93201875.7
(22) Anmeldetag: 28.06.1993
(51) Int. Cl.: G02F 1/00, H04N 9/31, H01J 63/04

(54) **Lichtquelle mit einer lumineszierenden Schicht**
Light source with luminescent layer
Source de lumière avec une couche luminescente

(30) Priorität: 04.07.1992 DE 4222028
(43) Veröffentlichungstag der Anmeldung: 12.01.1994
(73) Patentinhaber: Philips Patentverwaltung GmbH, 22335 Hamburg (DE); Koninklijke Philips Electronics N.V., 5621 BA Eindhoven (NL)
(72) Erfinder: Raue, Ralf, Dr., D-20097 Hamburg (DE); Welker, Thomas, Dr., D-20097 Hamburg (DE); Hikmet, Rifat, Dr., NL-5621 BA Eindhoven (NL)
(74) Vertreter: Hartmann, Heinrich, Dipl.-Ing.

(56) Entgegenhaltungen:
- EP-A- 367 332
- EP-A- 407 830
- EP-A- 492 585
- JAPANESE JOURNAL OF APPLIED PHYSICS Bd. 29, 1990, TOKYO JP Seiten 1974 - 1984 SCHADT ET AL. 'NEW LIQUID CRYSTAL POLARIZED COLOR PROJECTION PRINCIPLE'

## Beschreibung

Die Erfindung bezieht sich auf eine Lichtquelle mit einer lumineszierenden Schicht, deren Licht durch ein optisches Filter geleitet ist.

Durch die DE-OS 38 36 955 ist eine derartige Lichtquelle in Anwendung für eine Farbprojektionsanordnung mit drei monochromatischen Kathodolumineszens-Lichtquellen bekannt. Zwischen einem Frontsubstrat und einer Leuchtstoffschicht ist ein Vielschicht-Interferenzfilter angeordnet, welches als Lichtkollektionsfilter eine Bündelung der Lichtstrahlung in Vorwärtsrichtung bewirkt. Die Herstellung von Interferenzfiltern ist aufwendig. Besonders problematisch ist die für die Funktion unbedingt erforderliche Einhaltung der Dickenkonstanz der Einzelschichten.

Aus der EP-A-407 830 ist ein Farbprojektionssystem bekannt, bei dem weißes unpolarisiertes Licht durch cholesterische Flüssigkristallanzeigezellen geleitet wird.

Der Erfindung liegt die Aufgabe zugrunde, eine Kombination eines optischen Filters und einer Lichtquelle mit einem Filter zu schaffen, welches einfach herstellbar ist und geringe Lichtverluste verursacht.

Die Lösung gelingt durch die in Anspruch 1 angegebene Kombination.

An sich bekannte cholesterische Filter (vgl. EP-A 0 154 953) sind in einem wählbaren Wellenlängenbereich für in einer bestimmten Drehrichtung (z.B. linksdrehend) zirkular polarisiertes Licht durchlässig, während das in Gegendrehrichtung (z.B. rechtsdrehend) zirkular polarisierte Licht reflektiert wird.

Im Falle der Verwendung als Polarisationsfilter kann entweder das transmittierte oder das reflektierte Licht genutzt werden, also höchstens die Hälfte des unpolarisierten Eingangslichts. Bei erfindungsgemäßer Kombination einer lumineszierenden schmalbandigen Lichtquelle mit einem cholesterischen Polarisationsfilter wird das von der cholesterischen Schicht reflektierte Licht von der lumineszierenden Schicht depolarisiert zur cholesterischen Schicht zurückreflektiert, wobei dann etwa die Hälfte dieses Lichts als z.B. linksdrehend polarisiertes Licht durch das cholesterische Polarisationsfilter dringt. Der Rest des zurückreflektierten Lichts wird wiederum zur lumineszierenden Schicht reflektiert und von dort erneut depolarisiert zur cholesterischen Schicht zurückreflektiert. Dieser Vorgang kann sich analog vielfach wiederholen, so daß schließlich unter Berücksichtigung unvermeidbare Absorptionsverluste etwa 80% des unpolarisierten Eingangslichts als z.B. linksdrehend polarisiertes Licht durch das cholesterische Polarisationsfilter dringt. Ein derartiges Polarisationsfilter mit hohem Anteil an nutzbarem polarisierten Licht ist dadurch gekennzeichnet, daß das cholesterische Filter aus einer rechts- oder linksdrehenden cholesterischen Schicht besteht, bei welcher der Wellenlängenbereich, in welchem das transmittierte Licht polarisiert wird, größer als der Wellenlängenbereich des lumineszierenden Lichts ist, wobei der Wellenlängenbereich des cholesterischen Filters, in welchem senkrecht auffallendes Licht polarisiert wird, und der Wellenlängenbereich des lumineszierenden Lichts bei etwa gleicher niedriger Wellenlänge beginnen.

Die reflektierende Eigenschaft einer lumineszierenden Schicht ermöglicht es, das Interferenzfilter der durch die DE-OS 38 36 955 bekannten Anordnung durch eine besonders einfach herstellbare Kombination zweier gegensinnig polarisierender cholesterischer Schichten zu ersetzen. Eine entsprechende erfindungsgemäße Lösung ist dadurch gekennzeichnet, daß das cholesterische Filter ein Lichtkollektionsfilter ist, welches aus hintereinander angeordneten cholesterischen Schichten besteht, von denen eine rechtsdrehend und die andere im gleichen Wellenlängenbereich linksdrehend polarisiert, wobei der Wellenlängenbereich für diese Schichtkombination, in welchem senkrecht auffallendes Licht vollständig reflektiert wird, geringfügig oberhalb des Wellenlängenbereichs des lumineszierenden Lichts liegt.

Es ist vorteilhaft möglich, sowohl ein erfindungsgemäßes polarisierendes cholesterisches Filter als auch ein erfindungsgemäßes cholesterisches Lichtkollektionsfilter hintereinander anzuordnen und deren physikalische Wirkungen zu überlagern. Eine vereinfachte zweischichtige Lösung mit gleicher Wirkung ist dadurch gekennzeichnet, daß das cholesterische Filter eine erste polarisierende und eine zweite mit entgegengesetztem Drehsinn polarisierende Schicht aufweist, wobei der Wellenlängenbereich, bei welchem durch die erste Schicht dringendes Licht polarisiert wird, einerseits größer als der Wellenlängenbereich des lumineszierenden Lichts ist und andererseits bei senkrecht auffallendem Licht etwa bei gleich niedriger Wellenlänge wie der Wellenlängenbereich des lumineszierenden Lichts beginnt, und daß der Wellenlängenbereich, in welchem die zweite mit entgegengesetztem Drehsinn polarisierende Schicht senkrecht auffallendes Licht polarisiert, geringfügig oberhalb des Wellenlängenbereichs des lumineszierenden Lichts liegt.

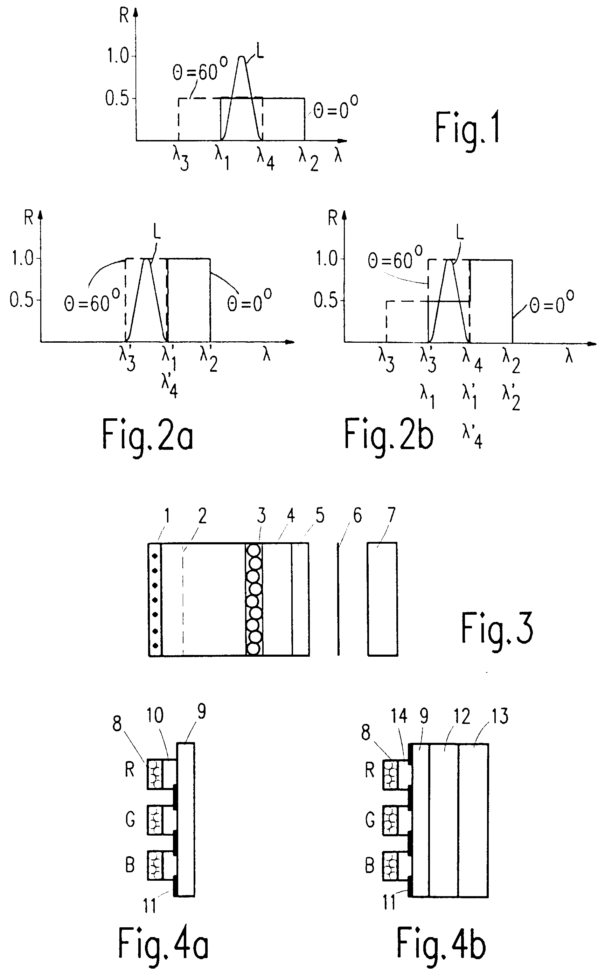

Eine vorteilhafte Anwendungsform der Erfindung ist dadurch gekennzeichnet, daß die Lichtquelle Bestandteil einer Kathodolumineszenslampe für LCD-Projektionsfernsehen ist (Fig.3), wobei zwischen Lichtquelle und LCD-Element ein λ/4-Element angeordnet ist.

Gemäß einer weiteren vorteilhafte Anwendungsmöglichkeit können erfindungsgemäße Lichtquellen Bestandteil eines flachen Farbbildschirms sein und ein Muster insbesondere verschiedenfarbiger Lichtquellen bilden. Dabei kann in Weiterbildung vorgesehen sein, daß die Lichtquellen hinter einem Substrat angeordnet und daß ein λ/4-Element sowie ein absorbierender Polarisator vor dem Substrat angeordnet sind.

Die vorteilhafte Wirkung der Erfindung wird anhand der Zeichnung erläutert und anhand der Beschreibung von vorteilhaften Ausführungsbeispielen verdeutlicht.
- Fig. 1: zeigt den reflektierenden Wellenlängenbereich eines cholesterischen Polarisationsfilters relativ zum Wellenlängenbereich einer lumineszierenden Schicht.
- Fig.2a: zeigt den reflektierenden Wellenlängenbereich eines cholesterischen Lichtkollektionsfilters relativ zum Wellenlängenbereich einer lumineszierenden Schicht.
- Fig.2b: zeigt den Reflexionsgrad einer Schichtkombination, welche Polarisations- und Kollektionseigenschaften aufweist.
- Fig.4a: zeigt schematisch einen Teilbereich eines Flach-Farbbildschirms mit integrierten cholesterischen Lichtkollektionsfiltern.
- Fig.4b: zeigt schematisch einen Teilbereich eines Flach-Farbbildschirms mit integrierten cholesterischen Filtern, welche entsprechend Fig. 2b wirken, wobei zusätzliche Maßnahmen zur Absorption von Umgebungslicht vorgesehen sind.

In Fig. 1 ist der Reflektionsgrad R einer links- oder rechtsdrehend polarisierenden cholesterischen Schicht über der Wellenlänge λ dargestellt. In idealisierter Darstellung wird von auftreffendem unpolarisierten Licht in einem begrenzten Wellenlängenbereich die Hälfte als in einer Drehrichtung zirkular polarisiertes Licht transmittiert, während die andere Hälfte des auftreffenden Lichts als gegensinnig zirkular polarisiertes Licht reflektiert wird. Die Lage dieses Wellenlängenbereichs ist vom Winkel Θ zwischen der Richtung der auftreffenden Strahlung zur Normalen auf die cholesterische Schicht abhängig. Für Θ=0 ergibt sich ein reflektierender Bereich zwischen λ₁ und λ₂, für Θ=60° zwischen λ₃ und λ₄. Mit der Kennlinie L ist wellenlängenabhängig die relative Intensität des auf die cholesterische Schicht fallenden Lichts dargestellt. Praktisch die gesamte Strahlung der lumineszierenden Schicht liegt im Wellenlängenbereich zwischen λ₁ und λ₄, so daß die Hälfte dieser Strahlung im Winkelbereich 60°>Θ>0 unmittelbar als polarisiertes Licht durch die cholesterische Schicht dringt. Die reflektierte Strahlung wird größtenteils von der lumineszierenden Schicht depolarisiert und zurückreflektiert. Deshalb kann etwa die Hälfte der zurückreflektierten Strahlung als zirkular polarisiertes Licht zusätzlich durch die cholesterische Schicht dringen. Der Vorgang der Reflektion von der cholesterischen Schicht und der Rückreflektion von der lumineszierenden Schicht kann sich mehrmals wiederholen, so daß im Endergebnis unter Berücksichtigung unvermeidbare Absorptionsverluste bis zu 80 % des unpolarisierten Ausgangs lichts als zirkular polarisiertes Licht durch die cholesterische Schicht dringt.

Die Breite des Wellenlängenbereichs λ₁ - λ₂ bzw. λ₃ - λ₄ ist derart zu wählen, daß ein zumindest überwiegender Anteil des Spektrums der lumineszierenden Schicht zwischen Θ = 0° und einem nahe dem Strahlungswinkel der lumineszierenden Strahlung liegenden Winkel Θ (im Beispiel Θ = 60°) reflektiert wird. Dabei ist es vorteilhaft, daß die Grenzwellenlänge λ₁ für Θ = 0° der kleineren Grenzwellenlänge des lumineszierenden Lichts nahe benachbart ist. Gemäß Fig. 1 ergibt sich eine Lichtquelle für zirkular polarisiertes Licht, bei welcher das unpolarisierte Ausgangslicht nicht nur zu 50%, wie bei herkömmlichen Polarisatoren, sondern bis zu 80% in zirkular polarisiertes Licht umgewandelt wird.

In Fig. 2a ist der Reflektionsgrad einer Hintereinanderanordnung zweier gegensinnig zirkular polarisierender cholesterischer Schichten für die Winkel Θ = 0 und Θ = 60° analog Fig. 1 dargestellt. In Gegensatz zu Fig. 1 liegt der Wellenbereich der lumineszierenden Strahlung L außerhalb, aber in enger Nachbarschaft zum Wellenlängenbereich zwischen λ₁' und λ₂', in welchen die beiden cholesterischen Schichten das gesamte mit Θ = 0° auftretende Licht reflektieren. Das bedeutet, mit dem Winkel Θ = 0° auftretendes Lumineszenz-Licht dringt vollständig durch die cholesterischen Schichten. Dagegen ist der reflektierende Bereich der cholesterischen Schicht bei mit Θ = 60° auftreffender Strahlung auf Werte zwischen λ₃' und λ₄' verschoben, so daß mit Θ>60° auftreffende Strahlung zunächst vollständig zur lumineszierenden Schicht reflektiert wird. Von dort wird sie aber mit Strahlungswinkeln, die vorwiegend in Bereich 0<Θ<60° liegen, zurückreflektiert und vermag dann die cholesterischen Schichten zu durchdringen, wobei sich der Vorgang der Reflektion und Zuruckreflektion mehrmals wiederholen kann. Im Endergebnis wird der mit zu großen Winkeln Θ abgestrahlte Teil der lumineszierenden Strahlung mit hohem Wirkungsgrad in Strahlung mit erheblich verkleinertem Winkel Θ umgeformt. Für einen guten Wirkungsgrad ist es vorteilhaft, daß die Grenzwellenlängen λ₃' und λ₄' möglichst nahe an den Grenzwellenlängen des Spektrums der lumineszierenden Strahlung liegen. Infolge der Kombination mit einer lumineszierenden Schicht wirken die beiden gegensinnig zirkular polarisierenden cholesterischen Schichten als ein Lichtkollektionsfilter mit hohem Transmissionsgrad.

Bei einer Schichtenanordnung nach Fig. 2b in Verbindung mit einer lumineszierenden Schicht erhält man ein optisches Filter, welches mit hohem Wirkungsgrad gleichzeitig zirkular polarisiert und das Ausgangslicht auf einen engen Strahlungswinkelbereich in Vorwärtsrichtung bündelt. Auch in Fig. 2b ist der sich bei senkrecht einfallenden Licht ergebende Reflexionsgrad voll ausgezogen, der sich bei 60° ergebende Reflexionsgrad dagegen gestrichtelt gezeichnet. Die dargestellten Kennlinien ergeben sich bei Überlagerung zweier gegensinnig polarisierender cholesterischer Schichten. Eine dieser Schichten ist gemäß Fig. 1, die andere analog einer der Schichten nach Fig. 2a ausgelegt. Entsprechend wurden für die Eckwerte der Wellenlängen gleiche Bezeichnungen gewählt.

In den Figuren 3,4a und 4b sind Beispiele für besonders vorteilhafte Anwendungen erfindungsgemäßer cholesterischer Filter schematisch dargestellt.

Gemäß Fig. 3 ist eine Kathodolumineszenzlichtquelle (vgl. DE-OS 38 36 955) mit einer Kathode 1, einem Gitter 2, einer lumineszierenden Schicht 3, einem transparenten Substrat 4 und einem entsprechend Fig. 2b dreischichtigen cholesterischen Filter 5 aufgebaut. Das cholesterische Filter leitet zirkular polarisiertes Licht mit gebündeltem Strahlungskegel über ein λ/4-Element 6 auf eine LCD-Lichtröhre 7 mit matrixförmig ageordneten steuerbaren LCD-Ventilen. Vom λ/4-Element 6 wird das zirkular polarisierte Licht praktisch verlustlos in linear polarisiertes Licht umgewandelt, welches für die Steuerbarkeit der LCD-Ventile der LCD-Lichtröhre 7 benötigt wird.

Mit einer erfindungsgemäßen Anordnung nach Fig. 3 wird das Ausgangslicht der lumineszierenden Schicht nicht nur wie im bekannten Fall zu weniger als 50%, sondern zu etwa 70% auf die LCD-Röhre 7 geleitet. In bekannten Fall würde nämlich ein erforderlicher Polarisator mehr als 50% und ein Interferenzfilter einen zusätzlichen Anteil des Ausgangslichts abblocken.

In Fig. 4a ist ein Teilbereich eines Flach-Farbbildschirms angedeutet. Ein solcher Bildschirm enthält ineinander geschachtelte rasterförmige Muster von roten (R), grünen (G), blauen (B) lumineszierenden Flächenelementen 8, welche selektiv von einer nicht dargestellten Kathodenanordnung (z.B. Feldemittertyp) mit Elektronen bestrahlt werden (vgl. PCT/US 87/01747).

Zwischen dem gemeinsamen transparenten Substrat 9 und den Flächenelementen 8 sind der jeweiligen "Farbe" angepaßte cholesterische Filterelemente 10 angeordnet. Das Licht der lumineszierenden Flächenelemente 8 dringt durch die Rasteröffnungen der sogenannten "Black Matrix" 11 durch das Substrat 9 hindurch. Die "Black Matrix" 11 soll die Reflektion von auf das Substrat 9 fallendem Außenlicht schwächen.

Die cholesterischen Filterelemente sind zweischichtig gemäß Fig. 2 ausgebildet und bewirken entsprechend einem Interferenzfilter eine höhere Helligkeit in Vorwärtsrichtung. Im Gegensatz zu einem Interferenzfilter ist aber ein gleichwirkendes cholesterisches Filter sehr viel einfacher herstellbar. Insbesondere ist die Filterwirkung praktisch unabhängig von Schwankungen der Schichtdicke. Man muß allerdings darauf achten, daß bei der Herstellung einer cholesterische Schichten enthaltenden Anordnung nach dem Aufbringen der cholesterischen Schichten Temperaturen von mehr als 200°C vermieden werden, weil sonst die organischen cholesterischen Schichten zerstört werden.

Bei einer abgewandelten Anordnung nach Fig. 4b kann man auf einfache Weise eine die Wirkung der "Black Matrix" unterstützende Absorption von Umgebungslicht erreichen. Dazu werden die cholesterischen Filterelemente 10 nach Fig. 4a durch cholesterische Filterelemente 14 entsprechend Fig. 2b ersetzt. Zusätzlich sind ein λ/4-Element 12 und ein Polarisator 13 vorgesehen. Das λ/4-Element 12 wandelt das einfallende zirkular polarisierte Licht in linear polarisiertes Licht um. Der Polarisator 13 ist derart angeordnet, daß dieses linear polarisierte Licht vollständig durchgelassen wird. Andererseits kann von auf den Polarisator 13 auftreffendem Außenlicht höchstens die Hälfte reflektiert werden, während der Rest absorbiert wird.

## Patentansprüche

1. Kombination eines optischen Filters und einer Lichtquelle mit einer lumineszierenden Schicht (3,8), die Licht in einem ersten Wellenlängenbereich emittiert und deren Licht durch das optisches Filter geleitet wird,
dadurch gekennzeichnet, daß das optische Filter ein cholesterisches Filter mit mindestens einer rechts- oder linksdrehenden cholesterischen Kristallschicht (5, 10) ist, die das senkrecht auffallende transmittierte Licht in einem zweiten Wellenlängebereich polarisiert, daß der zweite Wellenlängenbereich größer als der erste Wellenlängenbereich ist, und daß der zweite Wellenlängenbereich des cholesterischen Filters und der erste Wellenlängenbereich des lumineszierenden Lichts bei etwa gleicher niedriger Wellenlänge beginnen.

2. Kombination nach Anspruch 1,
dadurch gekennzeichnet, daß das cholesterische Filter ein Lichtkollektionsfilter mit zwei hintereinander angeordneten cholesterischen Schichten ist, von denen eine rechtsdrehend und die andere im gleichen Wellenlängenbereich linksdrehend polarisiert, wobei der Wellenlängenbereich dieser Schichtkombination, in welchem senkrecht auffallendes Licht vollständig reflektiert wird, geringfügig oberhalb des ersten Wellenlängenbereichs liegt.

3. Kombination nach Anspruch 1,
dadurch gekennzeichnet, daß das cholesterische Filter zwei mit entgegengesetztem Drehsinn polarisierende Schichten aufweist, wobei der Wellenlängenbereich, in welchem durch die erste Schicht dringendes Licht polarisiert wird, einerseits größer als der erste Wellenlängenbereich ist und andererseits bei senkrecht auffallendem Licht etwa bei gleich niedriger Wellenlänge wie der erste Wellenlängenbereich beginnt, und daß der Wellenlängenbereich, in welchem senkrecht auffallendes Licht durch die zweite, mit entgegengesetztem Drehsinn polarisierende Schicht transmittiert wird, geringfügig oberhalb des ersten Wellenlängenbereichs liegt.

4. Lichtquelle nach Anspruch 1 oder 3,
dadurch gekennzeichnet, daß die Lichtquelle Bestandteil einer Kathodolumineszenslampe für LCD-Projektionsfernsehen ist, wobei zwischen Lichtquelle und LCD-Element (7) ein λ/4-Element (6) angeordnet ist.

5. Lichtquelle nach Anspruch 2,
dadurch gekennzeichnet, daß die Lichtquelle Bestandteil eines flachen Farbbildschirms mit einem Muster verschiedenfarbiger Lichtquellen ist.

6. Lichtquelle nach Anspruch 5,
dadurch gekennzeichnet, daß die Lichtquelle hinter einem Substrat (9) angeordnet ist und daß ein λ/4-Element (12) sowie ein absorbierender Polarisator (13) vor dem Substrat (9) angeordnet sind.

## Claims

1. A combination of an optical filter and a light source having a luminescent layer (3,8) which units light in a first wavelength range and whose light is guided through the optical filter, characterized in that the optical filter is a cholesteric filter having at least a dextrorotatory or a laevorotatory cholesteric crystal layer (5, 10) which polarizes the wavelength range perpendicularly incident transmitted light in a second wavelength range, in that the second is larger than the first wavelength range and in that, the second wavelength range of the cholesteric filter and the first wavelength range of the luminescent light start at approximately equal, low wavelengths.

2. A combination as claimed in claim 1, characterized in that the cholesteric filter is a light collection filter comprising successively arranged cholesteric layers, one of which polarizes in a dextrorotatory sense and the other polarizes in a laevorotatory sense in the same wavelength range, the wavelength range for said combination of layers, in which perpendicularly incident light is completely reflected, being slightly above the first wavelength.

3. A combination as claimed in claim 1, characterized in that the cholesteric filter comprises two polarizing layers having an opposite sense of rotation, in which the wavelength range, at which light passing through the first layer is polarized, is larger than the first wavelength range and in the case of perpendicularly incident light, starts approximately at the same low wavelength as the wavelength range, and in that the wavelength range, in which the second layer polarizing in the opposite sense of rotation transmits perpendicularly incident light, is slightly above the first wavelength range.

4. A light source as claimed in any claim 1 or 3, characterized in that the light source forms part of a cathodoluminescent lamp for LCD-projection television, in which a λ/4 element (6) is arranged between the light source and the LCD element (7).

5. A light source as claimed in claim 2, characterized in that the light source forms part of a flat color display screen having a pattern of light sources of different colors.

6. A light source as claimed in claim 5, characterized in that the light source is arranged behind a substrate (9) and in that a λ/4 element (12) as well as an absorbing polarizer (13) are arranged in front of the substrate (9).

## Revendications

1. Combinaison d'un filtre optique et d'une source lumineuse avec une couche luminescente (3,8), la lumière étant émise dans une première plage de longueurs d'ondes et ensuite conduite par le filtre optique,
caractérisée en ce que le filtre optique est un filtre cholestérique avec au moins une couche cristalline cholestérique lévogyre ou dextrogyre (5,10) qui polarise la lumière transmise appliquée perpendiculairement dans une deuxième plage de longueurs d'ondes, que la deuxième plage de longueurs d'ondes est supérieure à la première plage de longueurs d'ondes et que la deuxième plage de longueurs d'onde du filtre cholestérique et la première plage de longueurs d'ondes de la lumière luminescente commencent à peu près à la même longueur d'ondes inférieure.

2. Combinaison selon la revendication 1,
caractérisée en ce que le filtre cholestérique est un filtre collecteur de lumière avec deux couches cholestériques disposées successivement dont l'une est polarisée de manière dextrogyre et l'autre de manière lévogyre dans la même plage de longueurs d'ondes, la plage de longueurs d'ondes de cette combinaison de couches dans laquelle la lumière appliquée perpendiculairement est réfléchie complètement se situant légèrement au-dessus de la première plage de longueurs d'ondes.

3. Combinaison selon la revendication 1,
caractérisée en ce que le filtre cholestérique présente deux couches polarisantes avec des sens de rotation opposés, la plage de longueurs d'ondes dans laquelle la lumière pénétrant par la première couche est polarisée étant, d'une part, supérieure à la première plage de longueurs d'ondes et, d'autre part, pour une lumière appliquée perpendiculairement, commençant à peu près à la même longueur d'ondes inférieure que la première plage de longueurs d'ondes et que la plage de longueurs d'ondes dans laquelle la lumière appliquée perpendiculairement est transmise par la deuxième couche polarisante dans un sens de rotation opposé se situe légèrement au-dessus de la première plage de longueurs d'ondes.

4. Source lumineuse selon l'une des revendications 1 ou 3,
caractérisée en ce que la source lumineuse fait partie d'une lampe à luminescence cathodique pour un moniteur de projection LCD, un élément λ/4 (6) étant disposé entre la couche lumineuse et l'élément LCD (7).

5. Source lumineuse selon la revendication 2,
caractérisée en ce que la source lumineuse fait partie d'un écran plat en couleurs avec une trame de sources lumineuses de différentes couleurs.

6. Source lumineuse selon la revendication 5,
caractérisée en ce que la source lumineuse est disposée derrière un substrat (9) et qu'un élément λ/4 (12) ainsi qu'un polarisateur absorbant (13) sont disposés devant le substrat (9).
